**Europäisches Patentamt**

**European Patent Office**

**Office européen des brevets**

(19)

(11) Veröffentlichungsnummer: **0 232 913**
**A2**

(12)
# EUROPÄISCHE PATENTANMELDUNG

(21) Anmeldenummer: **87101961.8**

(22) Anmeldetag: **12.02.87**

(51) Int. Cl.⁴: **B 65 G 57/112**

(30) Priorität: **14.02.86 DE 3604588**
**24.03.86 DE 3609940**

(43) Veröffentlichungstag der Anmeldung: **19.08.87**
**Patentblatt 87/34**

(84) Benannte Vertragsstaaten: **AT BE CH DE ES FR GB GR IT LI LU NL SE**

(71) Anmelder: **Büttner, Hans Hugo, Obmettmann 13, D-4020 Mettmann (DE)**

(72) Erfinder: **Büttner, Hans Hugo, Obmettmann 13, D-4020 Mettmann (DE)**

(74) Vertreter: **Rieder, Hans-Joachim, Dr., Corneliusstrasse 45 Postfach 11 04 51, D-5600 Wuppertal 11 (DE)**

(54) **Vorrichtung zum Bilden mehrschichtiger Stapel von Packstücken oder dergleichen auf palettenförmigen Trägern.**

(57) Die Erfindung betrifft eine Vorrichtung zum Bilden mehrschichtiger Stapel von Packstücken (24) oder dergleichen auf palettenförmigen Trägern (30), mit einem der Palette benachbarten Auswärtsförderer (21), welcher die Packstücke (24) oder dergleichen auf eine über die Palettenstapel-Oberseite höhenverlagerbaren Packstück-Stützbahn übergibt, welche Packstück-Stützbahn im Bereich oberhalb der Palettenstapel-Oberseite zum Ablegen der auf ihn befindlichen Schicht öffenbar ist; sie schlägt zur arbeitstechnischen Optimierung vor, dass die Höhenlage der Position, in welcher der Aufwärtsförderer (21) die Packstücke (24) auf die Packstück-Stützbahn übergibt, jeweils übereinstimmt mit der Position, in welcher sich die Packstück-Stützbahn öffnet.

## Vorrichtung zum Bilden mehrschichtiger Stapel von Packstücken oder dergleichen auf palettenförmigen Trägern

Die Erfindung betrifft eine Vorrichtung zum Bilden mehrschichtiger Stapel von Packstücken oder dergleichen auf palettenförmigen Trägern, mit einem der Palette benachbarten Aufwärtsförderer, welcher die Packstücke oder dergleichen auf eine über die Palettenstapel-Oberseite ragende, höhenverlagerbare Packstück-Stützbahn übergibt, welche Packstück-Stützbahn im Bereich oberhalb der Palettenstapel-Oberseite zum Ablegen der auf ihr befindlichen Schicht öffenbar ist.

Es ist bekannt, den palettenförmigen Träger mittels einer Hubvorrichtung bis zur Packstück-Stützbahn anzuheben, so daß nach Öffnen derselben die auf dieser befindliche Schicht ablegbar ist. Anschließend fährt die Hubvorrichtung um das Maß einer Packstückschicht in Abwärtsrichtung, damit die erneut auf der Packstück-Stützbahn gebildete Schicht auf die Palettenstapel-Oberseite gelegt werden kann. Diese Ausgestaltung ist aufwendig. Der Antrieb der Hubvorrichtung muß so stark dimensioniert sein, daß er die voll beladene Palette transportieren und abbremsen kann. Da der Transport der beladenen Palette dabei in Abwärtsrichtung erfolgt, müssen zusätzlich noch die sich zwangsläufig ergebenden kinetischen Energien verzehrt werden. Erfolgt ein abruptes Abbremsen, so kann dieses zu ungewollten Verschiebungen der einzelnen Packstücke führen, was naturgemäß die Stabilität des Ladegutes mindert. Außerdem ist diese Bauform energietechnisch aufwendig.

Ferner ist eine Ausgestaltung auf dem Markt bekannt, bei welcher eine Packstück-Zuführbahn die Packstücke an eine in angehobener Stellung befindliche Packstück-Stützbahn übergibt. Nach Bilden der Pack-

0232913

2

stück-Schicht auf der Packstück-Stützbahn bringt der Aufwärtsförderer diese etwa auf Höhe der Palettenstapel-Oberseite. Das bedeutet, daß die der Packstück-Stützbahn sowie die der auf ihr befindlichen Schicht innewohnenden kinetischen Energien aufgezehrt werden müssen verbunden mit einer aufwendigeren Antriebsvorrichtung. Nach Öffnen der Packstück-Stützbahn und Ablegen der Packstück-Schicht bringt sodann der Aufwärtsförderer die Packstück-Stützbahn in die obere Beladestellung zurück. Der Rückweg der Packstück-Stützbahn sowie der Verzögerungsweg beim Abbremsen der abwärts bewegten Packstück-Stützbahn machen sich als Verlustzeiten bemerkbar, was sich leistungsmindernd auswirkt. Es ist nämlich sehr schwierig bzw. überhaupt nicht möglich, die beschichtete Packstück-Stützbahn kurzfristig in einem äußerst geringen Abstand von der Palettenstapel-Oberseite zum Stillstand zu bringen. Ferner kann das Öffnen der Packstück-Stützbahn erst dann erfolgen, wenn die Packstück-Stützbahn stillsteht. Findet ein überlagerndes Öffnen der Packstück-Stützbahn während der Verzögerung statt, so kann dieses zu Störungen beim Ablegen der Packstück-Schicht führen.

Dem Gegenstand der Erfindung liegt die Aufgabe zugrunde, eine gattungsgemäße Vorrichtung bei einfachem, leistungsstarkem Aufbau so auszugestalten, daß weder der gesamte Stapel noch die geordnete abzulegende Schicht einen Höhentransport erfährt.

Gelöst wird diese Aufgabe dadurch, daß die Höhenlage der Position, in welcher der Aufwärtsförderer die Packstücke auf die Packstück-Stützbahn übergibt, jeweils übereinstimmt mit der Position, in welcher sich die Packstück-Stützbahn öffnet.

Zufolge derartiger Ausgestaltung ist eine Vorrichtung der in Rede stehenden Art angegeben, die bei vereinfachtem Aufbau eine höhere Stapelleistung bringt. Das Beladen der Packstück-Stützbahn mittels des Aufwärtsförderers findet jeweils in der Position statt, in welcher

19 029  Dr.R./P./Rz.  11.2.1987

die Packstück-Stützbahn zum Ablegen der auf ihr befindlichen Packstück-Schicht öffnet. Anschließend fährt die Packstück-Stützbahn in die nächst höhere Position, welche um die Dicke der Packstück-Schicht höherliegt. Dieses Anfahren der nächsten Beladeposition erfolgt jedoch ohne Belastung durch Packstücke, so daß hinsichtlich der Steuerungs-Bremsteile keine kinetischen Energien aus Packstücken zu verzehren sind. Die Konstruktion braucht daher im wesentlichen nur den statischen Anforderungen zu genügen, was es erlaubt, Herstellungskosten einzusparen. Weil nach einem Ablegen einer Packstück-Schicht die Packstück-Stützbahn nur um das Maß einer Schichtdicke in Aufwärtsrichtung zu fahren braucht, ergibt sich eine Wegeinsparung verbunden mit kürzeren Beladezeiten. Da weder der gesamte Palettenstapel noch Packstück-Schichten transportiert werden müssen verbunden mit zugeordneten Bremseinrichtungen, läßt sich auch ein energiesparenderes Beladen verwirklichen.

Eine vorteilhafte Weiterbildung besteht darin, daß die Packstück-Stützbahn von Stäben gebildet ist, die sich zwischen Ketten erstrecken, welche beiderseits eines in seiner Größe etwa der Packstück-Oberseite entsprechenden höhenverlagerbaren Rahmens gelagert sind. Das Öffnen der die Packstückschicht tragenden Packstück-Stützbahn erfolgt also durch Antrieb der Ketten, so daß sich dann die Stäbe aus ihrer Haltestellung entfernen und das Absenken der Schicht auf die Palettenstapel-Oberseite zulassen. Neben einer einfachen Bauform ergibt sich auch ein geringer Raumbedarf durch eine solche Konstruktion.

Dabei erweist es sich von Vorteil, wenn die Packstück-Stützbahn sich zum Entfernen aus dem Bereich der Palettenstapel-Oberseite, ausgehend von ihrem Mittelbereich, schieberförmig öffnet bis auf das Flächenmaß der Palettenstapel-Oberseite. Die Stäbe werden demgemäß von jeweils zwei parallel verlaufenden Ketten gehalten. Dadurch, daß das Öffnen vom Mittelbereich aus beginnt, halbiert sich die Öffnungszeit, um die Packstück-Schicht übergeben zu können. Zum Schließen

19 029   Dr.R./P./Rz.   11.2.1987

4

der Öffnung fahren die Ketten wieder gegeneinander, wobei die Stäbe in ihre Stützlage gelangen.

Um trotz leichter Bauform eine stabile Abstützung zu gewährleisten, laufen die Ketten der Packstück-Stützbahn-Stäbe in U-förmigen Seitenführungen des Rahmens und hängen in Öffnungsstellung der Packstück-Stützbahn vor den Stirnenden des Rahmens herunter. Demgemäß verhalten sich die Stäbe an den Ketten etwa wie ein Vorhang, der nach dem Öffnen beiderseits des Palettenstapels nach unten hängt. Dies führt ebenfalls zu einer Platzeinsparung.

Sodann besteht ein vorteilhaftes Merkmal darin, daß die Packstück-Stützbahn seitenversetzt liegt zur Ausgaberichtung des Aufwärtsförderers, welcher Seitenversatz überbrückt ist mit einer sich in Verlängerung der Ausgaberichtung erstreckenden Packstück-Zwischenförderstrecke, der ein die Packstücke quer zur Ausgaberichtung auf die Packstück-Stützbahn verschiebender Pusher zugeordnet ist. Es ist möglich, die Packstücke auf dieser Packstück-Zwischenförderstrecke entsprechend auszurichten, um ein unterschiedliches Versatzbild der einzelnen Packstück-Schichten zu erhalten. Die auf die Packstück-Zwischenförderstrecke gelangten Packstücke werden gemeinsam von dem Pusher auf die Packstück-Stützbahn bewegt, woran anschließend der Pusher in seine Ausgangsstellung zurückkehrt, um die nächsten Packstücke der Packstück-Stützbahn zuführen zu können.

Ein weiterer Vorteil ist darin zu sehen, daß die schieberartige Öffnungsbewegung der Packstück-Stützbahn parallel gerichtet ist zur Ausgaberichtung des Aufwärtsförderers.

Eine Möglichkeit, die Übergabe-Position vom Aufwärtsförderer an die Packstück-Stützbahn zu variieren, besteht darin, daß der Aufwärtsförderer als von umlaufenden Zügen, z. B. Kettenzügen, gebildeter Aufwärtsförderer gestaltet ist und eine Gliedertischfläche bildet. Auf die Gliedertischfläche werden die Einzelpackstücke vor Erreichen der Packstück-Übergabeposition zugeführt. Der Aufwärtsförderer kann daher als Vertikalförderer gestaltet sein verbunden mit einem geringen Raumbedarf der Vorrichtung.

Es erweist sich dabei als vorteilhaft, daß die Tischglieder des Aufwärtsförderers an mehreren in Höhenrichtung und seitlich der Tischglieder verlaufenden Zügen angeordnet sind derart, daß die Tischglieder über den Bereich der Transportstrecke tischbildend nebeneinander und im Bereich der Rücklaufabschnitte übereinanderliegend angeordnet sind, wobei ein- und auslaufseitige Tischglieder sich brückenförmig zwischen nebeneinanderliegenden Zügen erstrecken und die dazwischen befindlichen Tischglieder über den Bereich der Transportstrecke in eine Ebene zu diesen End-Tischgliedern treten, wobei sich die Gliedertischfläche im Bereich zweier benachbarter Umlenkräder der Züge bildet bzw. aufhebt, von denen mindestens das die Gliedertischfläche aufhebende Räderpaar an einem am Aufwärtsförderer-Ständer höhenverlagerbaren Räderträger sitzt. Gleichzeitig mit einer Höhenverstellung des Räderträgers verändert die Packstück-Stützbahn ihre Höhenlage, was dem vereinfachten Aufbau der Vorrichtung entgegenkommt.

Eine vorteilhafte Ausgestaltung zeichnet sich dabei darin aus, daß der Räderträger den Rahmen der Packstück-Stützbahn trägt.

Der Einsatzbereich der Vorrichtung ist dadurch vergrößert, daß dem Aufwärtsförderer Rücken an Rücken ein Packstück-Hochförderer zugeordnet ist und sämtliche Packstücke über den Scheitel des Aufwärtsförderers und von da aus, auf der Gliedertischfläche liegend, bis auf die Höhe der Packstück-Stützbahn bewegt sind. Auch der Packstück-Hochförderer ist mit ähnlich gestalteten Zügen sowie einem Räderträger versehen, der es erlaubt, seine Gliedertischfläche auf Höhe der Zuführbahn zu bilden. Daher können ungeachtet der Höhe der Zuführbahn ohne bauliche Veränderungen Packstücke bewegt und gestapelt werden. Damit die Gliedertischfläche sich unter Belastung nicht durchbiegt, verriegeln die Tischglieder sich in ihrer tischbildenden Stellung durch gegenseitigen formschlüssigen Eingriff an ihren Schmalkanten untereinander und sind durch einen Zusatzkettenstrang untereinander verbunden.

Eine andere Variante des Aufwärtsförderers zeichnet sich dadurch aus, daß auch die Zwischen-Tischglieder sich brückenförmig zwischen je zwei Zügen erstrecken und die Tischglieder-Abstandsteilung aller Züge untereinander gleich ist. Dadurch kann der Vertikalförderer weiterhin vereinfacht werden und läßt auch das Transportieren schwerer Packstücke schadfrei zu. Die die End-Tischglieder untereinander verbindenden Zusatzkettenstränge können nun entfallen, da die Zwischen-Tischglieder selbst an den ihnen zukommenden Zügen -bspw. Kettenzügen- vorgesehen sind. Zufolge der gleichen Tischglieder-Abstandsteilung aller Züge und Anordnung der Glieder an diesen befinden sich im Bereich der Vorlauf-Abschnitte bzw. der Transportstrecke die jeweiligen End-Tischglieder und Zwischen-Tischglieder in einer Ebene zur Aufnahme der Packstücke. Günstig ist es dabei, daß die unteren Achsen der Züge auf den Seiten eines Dreiecks liegen mit im Dreiecksscheitel befindlicher Achse für die am weitesten innenlaufenden Züge. Diese Maßnahme bringt konstruktive Vorteile. Nach unten hin ist Bewegungsspielraum für die Züge vorhanden, so daß sich auch die Tischglieder nicht gegenseitig stören. Sodann ergeben sich hieraus antriebstechnische Vorteile.

Damit auch bei dieser Bauform die Packstücke von der Gliedertischfläche sicher auf die Packstück-Zwischenförderstrecke gelangen, laufen die Tischglieder zwischen den Spalten von Rollwalzen hindurch, welche die Packstück-Zwischenförderstrecke bilden. Störungen beim Packstücktransport sind dadurch vermieden, daß die oberen Achsen aller Züge in einer Horizontalebene liegen.

19 029   Dr.R./P./Rz.   11.2.1987

Darüber hinaus erweist es sich als günstig, daß alle Züge in einem portalartigen Gestell angeordnet sind.

Bei größerem Raumbedarf ist es vorteilhaft, daß der Aufwärtsförderer als Schrägförderer mit sich zusammen mit der Packstück-Stützbahn höhenverlagerbarem oberen Ende gestaltet ist. Einhergehend mit einer Verlagerung verändert auch der Schrägförderer seine Neigung. Diese Bauform läßt besonders kurzfristige Beladungszeiten zu, da die Einzelpackstücke stets nur bis zur Höhe der jeweils zu bildenden Packstück-Schicht gefördert werden.

Bei der Schrägförderer-Bauform besteht ein vorteilhaftes Merkmal darin, daß das untere Ende des Schrägförderers in Überlappung zu einer Zubringerbahn längsverschieblich angeordnet ist. Zwangsläufige Neigungsverstellungen des Schrägförderers beeinträchtigen nicht die Übergabe der Packstücke von der Zubringerbahn zum Schrägförderer.

Nachstehend werden drei Ausführungsbeispiele der Erfindung anhand der Fig. 1 - 17 veranschaulicht. Es zeigt

Fig. 1    in schematischer Darstellung eine Ansicht der Vorrichtung gemäß der ersten Ausführungsform,

Fig. 2    eine Draufsicht auf die Vorrichtung,

Fig. 3    eine Seitenansicht des als Vertikalförderer ausgebildeten Aufwärtsförderers mit strichpunktiert angedeuteten Kettenzügen und   Kettenrädern,

Fig. 4    eine Ansicht des Vertikalförderers, in Pfeilrichtung IV der Fig. 3 gesehen,

19 029   Dr.R./P./Rz.   11.2.1987

0232913

8

Fig. 5   eine Ansicht des Vertikalförderers, in Pfeilrichtung V der Fig. 3 gesehen,

Fig. 6   in Einzeldarstellung einen Vertikalschnitt durch die Gliedertischfläche im Bereich des sie aufhebenden Kettenräderpaares,

Fig. 7   eine perspektivische Darstellung der Gliedertischfläche im Bereich dieses Kettenräderpaares,

Fig. 8   einen Horizontalschnitt durch die Packstück-Stützbahn oberhalb der Packstück-Stützbahn-Stäbe in ihrer Stützstellung,

Fig. 9   den Schnitt nach der Linie IX-IX in Fig. 8,

Fig. 10  den Schnitt nach der Linie X-X in Fig. 9,

Fig. 11  eine der Fig. 9 entsprechende Darstellung, jedoch während der Öffnungsbewegung der Packstück-Stützbahn,

Fig. 12  eine der Fig. 1 entsprechende Darstellung, wobei die Packstück-Stützbahn sowie der Kettenräderträger eine höhere Ebene einnehmen,

Fig. 13  in schematischer Darstellung eine Ansicht der Vorrichtung gemäß der zweiten Ausführungsform,

Fig. 14  eine Ansicht der Vorrichtung, in Pfeilrichtung XIV der Fig. 13 gesehen,

Fig. 15  in schematischer Darstellung eine Ansicht der Vorrichtung gemäß der dritten Ausführungsform, bei welcher der Aufwärtsförderer als Schrägförderer ausgebildet ist,

19 029  Dr.R./P./Rz.   11.2.1987

9

Fig. 16    eine Draufsicht auf die Vorrichung und

Fig. 17    eine der Fig. 15 entsprechende Darstellung, wobei die Palette nahezu beladen ist mit eine höhere Ebene einnehmender Packstück-Stützbahn und eine größere Neigung besitzendem Schrägförderer.

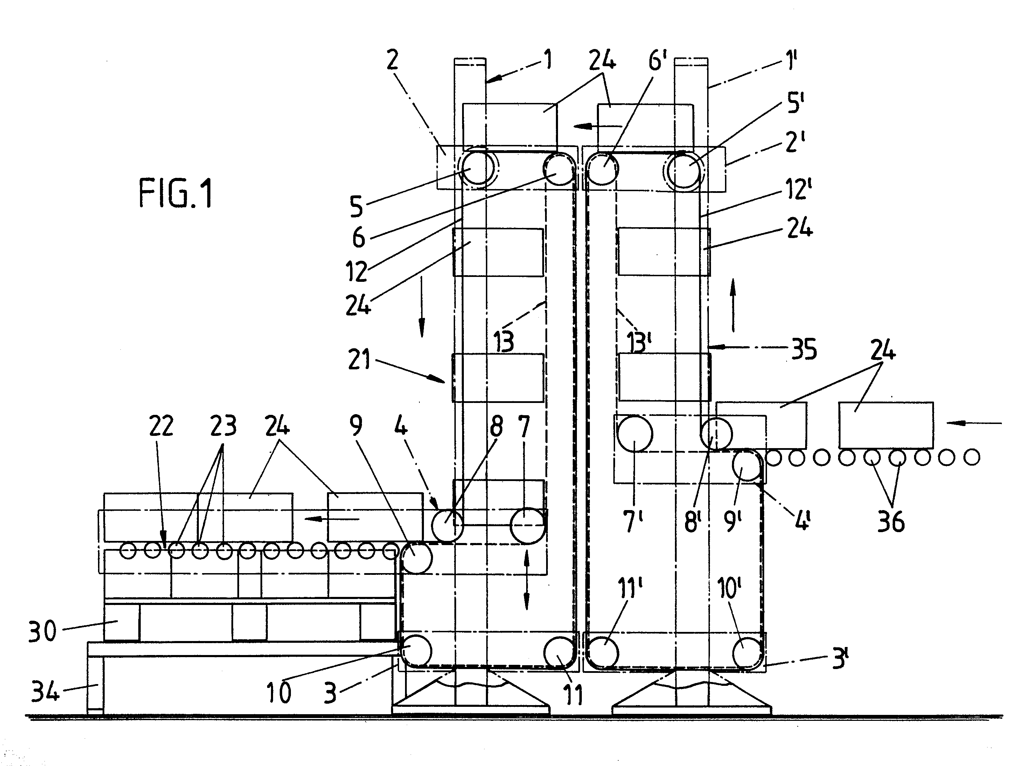

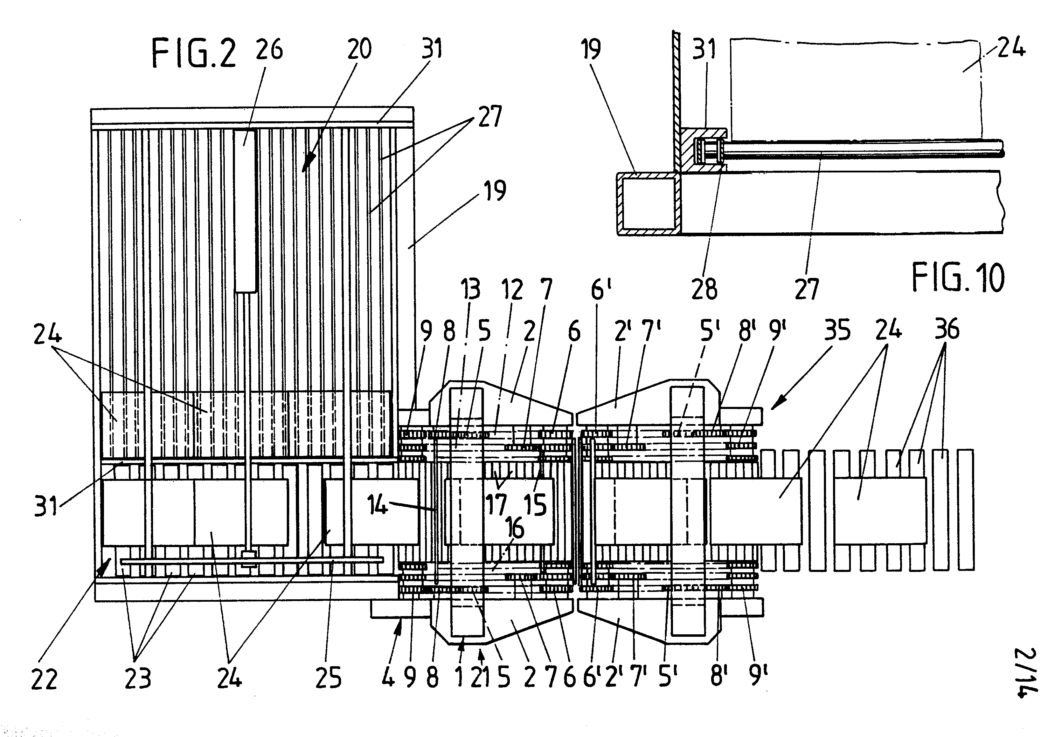

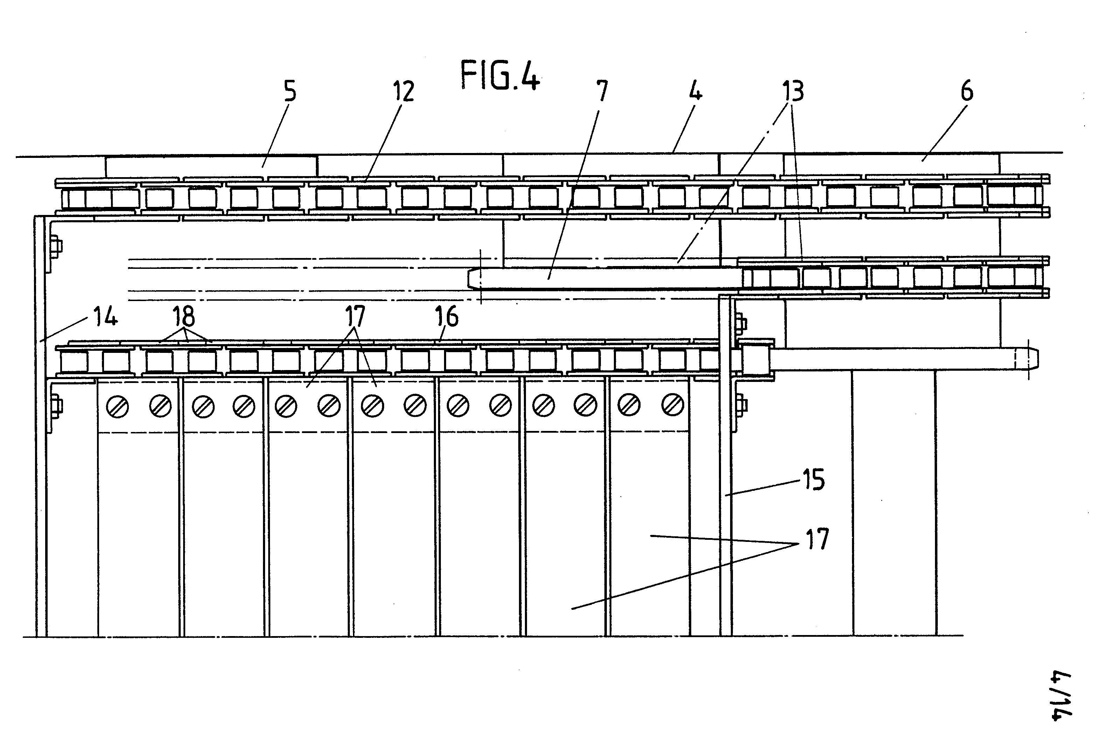

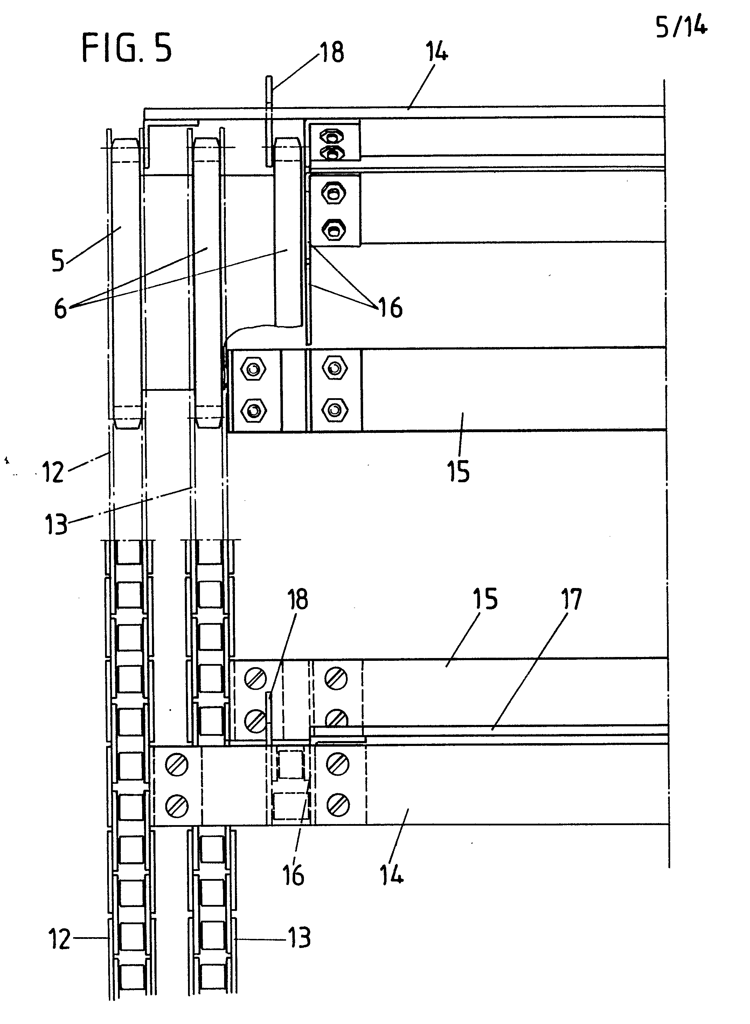

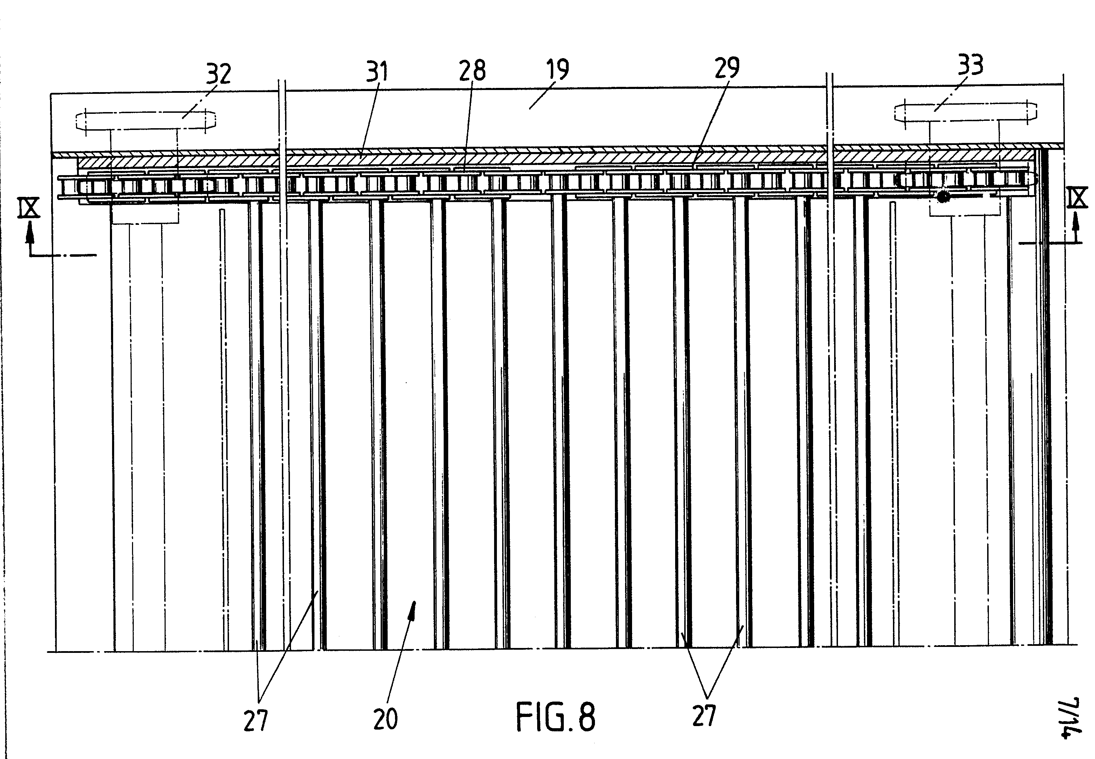

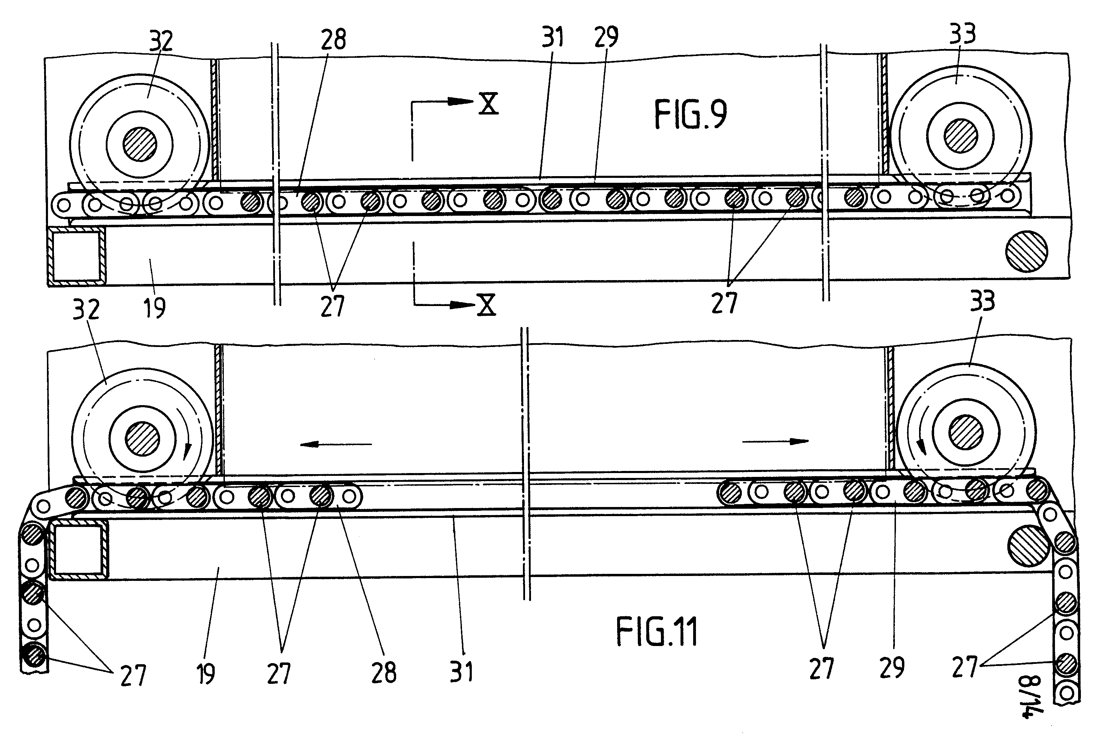

Die Vorrichtung gemäß der ersten Ausführungsform, dargestellt in den Fig. 1 - 12 besitzt einen portalartigen Vertikalförderer-Ständer 1 mit unteren und oberen Seitenwangen 2 und 3. Zwischen diesen ist am Ständer 1 ein Kettenräderträger 4 in Höhenrichtung geführt. Sowohl die Seitenwangen 2, 3 als auch der Kettenräderträger 4 lagern Kettenumlenkräder 5 bis 11, um welche paarig angeordnete Kettenzüge 12, 13 gelegt sind. Jeweils ein Paar Kettenzüge 12, 13 sind den Seitenwangen 2, 3 benachbart. Die Kettenzüge 12, 13 laufen nur auf dem Teil einer Länge fluchtend zueinander.  Eine Abweichung ergibt sich dadurch, daß die beiden weiter einwärts liegenden, in Fig. 1 gestrichelt dargestellten Kettenzüge 13 um die Umlenkräder 6, 7 gelegt sind. Die Kettenräder 7, 8, 9 sind ihrerseits an dem höhenverstellbaren Kettenräderträger 4 gelagert.

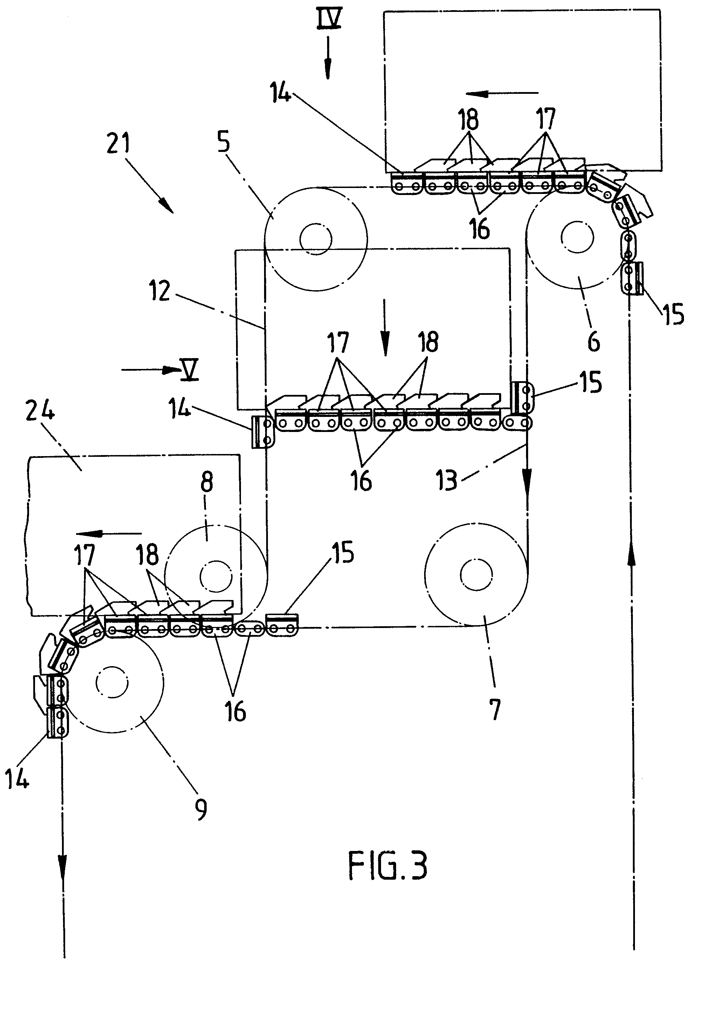

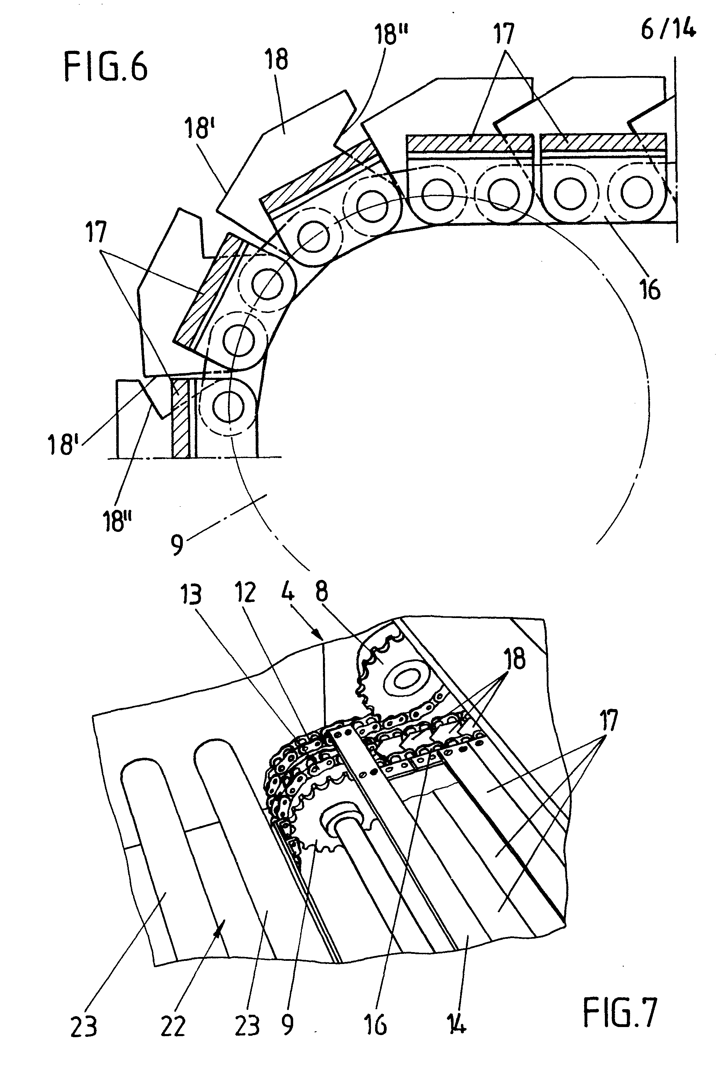

Die jeweils paarig angeordneten, sich aus Vorlauf- und Rücklaufkettenabschnitten zusammensetzenden Kettenzüge 12, 13 dienen zur Halterung von ein- und auslaufseitigen Tischgliedern 14, 15, die brückenförmig zwei gleichgestaltete, nebeneinanderliegende Kettenzüge 12 bzw. 13 untereinander verbinden. Die längeren, einlaufseitigen Tischglieder 14 sind endständig an den weiter auswärts liegenden Kettenzügen 12 befestigt, während die auslaufseitigen Tischglieder 15 von den Kettenzügen 13 getragen werden. Diese End-Tischglieder 14, 15 sind in unmittelbarer Nähe der inneren Kettenzüge 13 durch zwei Zusatzkettenstränge 16 untereinander verbunden, deren Glieder zwischen sich weitere Tischglieder 17 aufnehmen. Im Bereich des abweichenden Verlaufes der Kettenzüge bilden die Tischglieder 14, 15 und die dazwischen befindlichen Tischglieder 17 eine Gliedertischfläche. Damit sich diese unter Belastung nicht durchbiegt, sind die endseitigen Kettenglieder 18 so gestaltet, daß ihre einander zugekehrten Schmalkanten 18', 18'' in formschlüssigen Eingriff zueinander treten, vergl. insbesondere Fig. 3 und 6. Dieser Eingriff wird aufgehoben an dem Kettenräderpaar 9. Nach dem Aufheben der Tischgliederfläche laufen dann die Tischglieder übereinanderliegend auf dem Rücklauf-Kettenabschnitt um. Die entsprechenden Kettenräder sind an den Umlenkstellen entweder mit einem, mit zwei oder drei Zahnkränzen ausgestattet.

Die Kettenzüge 12, 13 tragen mehrere Gliedertischflächen. Die Förderstrecke befindet sich dabei zwischen den Kettenrädern 5, 6 und 7, 8, 9, welche Förderstrecke in ihrer Länge durch Höhenverlagerung des Kettenräderträgers 4 variierbar ist. Eines dieser Kettenräder ist mittels eines nicht veranschaulichten Motors antreibbar.

Der Kettenräderträger 4 ist Träger eines seitlich ausladenden, horizontal gerichteten Rahmens 19 einer Packstück-Stützbahn 20. Letztere liegt seitenversetzt zur Ausgaberichtung des vorbeschriebenen, die Kettenzüge 12, 13 enthaltenden Vertikalförderers 21. Der Seitenversatz ist dabei überbrückt von einer sich in Verlängerung der Ausgaberichtung erstreckenden Packstück-Zwischenförderstrecke 22, welche Rollwalzen 23 aufweist. Die Oberseite der Rollwalzen 23 liegt auf gleicher Höhe mit der sich zwischen den Kettenumlenkrädern 7, 9 befindlichen Gliedertischfläche. Der Packstück-Zwischenförderstrecke 22 ist ein die Packstücke 24 quer zur Ausgaberichtung auf die Packstück-Stützbahn 20 verschiebender Pusher 25 zugeordnet. Letzterer wird von einem am Rahmen 19 befestigten Hubzylinder 26 gesteuert.

Die Packstück-Stützbahn 20 ist von einzelnen Stäben 27 gebildet. Diese erstrecken sich quer zur Ausgaberichtung der Packstücke und liegen auf gleicher Höhe mit den Rollwalzen 23. Die Stäbe 27 sind an jeweils zwei sich gegenüberliegenden Ketten 28, 29 befestigt. Die einander zugekehrten Enden der Ketten 28, 29 enden etwa im Mittelbereich des Rahmens 19, dessen Größe etwa der Packstück-Oberseite bzw. des unterhalb davon befindlichen palettenförmigen Trägers 30 entspricht. Damit die Packstück-Stützbahn 20 nicht durchbiegt, laufen die Ketten 28, 29 in U-förmigen Seitenführungen 31 des Rahmens 19. Ihren Antrieb erhalten die Ketten 28, 29 von am Ramen 19 gelagerten, sich gegenläufig drehenden Kettenrädern 32, 33.

Zur Halterung des palettenförmigen Trägers 30 dient ein Fußgestell 34.

Dem Vertikalförderer 21 ist Rücken an Rücken ein Packstückhochförderer 35 zugeordnet. Dessen Aufbau entspricht demjenigen des Vertikalförderers 21. Es liegt im übrigen eine spiegelbildliche Ausgestaltung vor. Dieser Packstückhochförderer beinhaltet einen Ständer 1', Seitenwangen 2', 3' sowie einen Kettenräderträger 4', welche zur Lagerung der Kettenumlenkräder 5' bis 11' dienen. Der Kettenräderträger 4' wird auf eine solche Höhenlage gebracht, daß die von einer Zuführbahn 36 kommenden Packstücke 24 auf die in dieser Höhenlage gebildete Gliedertischfläche treten und danach in Pfeilrichtung aufwärts gefördert werden. Von da aus gelangen die Packstücke 24 auf Höhe des Scheitels des Vertikalförderers 21 bzw. der dort bereits gebildeten Gliedertischfläche. Es erfolgt nun die Abwärtsverlagerung der Gliedertischfläche mit den darauf befindlichen Packstücken. Die Gliedertischflächen durchlaufen die auf Höhe der Palettenstapel-Oberseite liegende Packstück-Abgabeposition und gelangen auf die Rollwalzen 23 der Packstück-Zwischenförderstrecke 22. Anschließend bringt der Pusher 25 die Packstücke 24 reihenweise auf die Packstück-Stützbahn 20. Nachdem dort eine aus Packstücken 24 bestehende Schicht gebildet ist, werden die Kettenräder 32, 33 gegensinnig angetrieben unter gegenläufiger Mitnahme der Ketten 28, 29 mit den daran befestigten Stäben 27. Die Packstück-Stützbahn 20 öffnet sich demgemäß von ihrem Mittelbereich her. Die dadurch gebildete Öffnung entspricht dem Flächenmaß der Palettenstapel-Oberseite, so daß die Packstücke entweder unmittelbar auf den Träger 30 oder eine darauf befindliche Packstück- schicht gelangen. Zufolge Festlegung an den Ketten 28, 29 hängen die Stäbe 27 vor den Stirnenden des Rahmens 19 herunter.

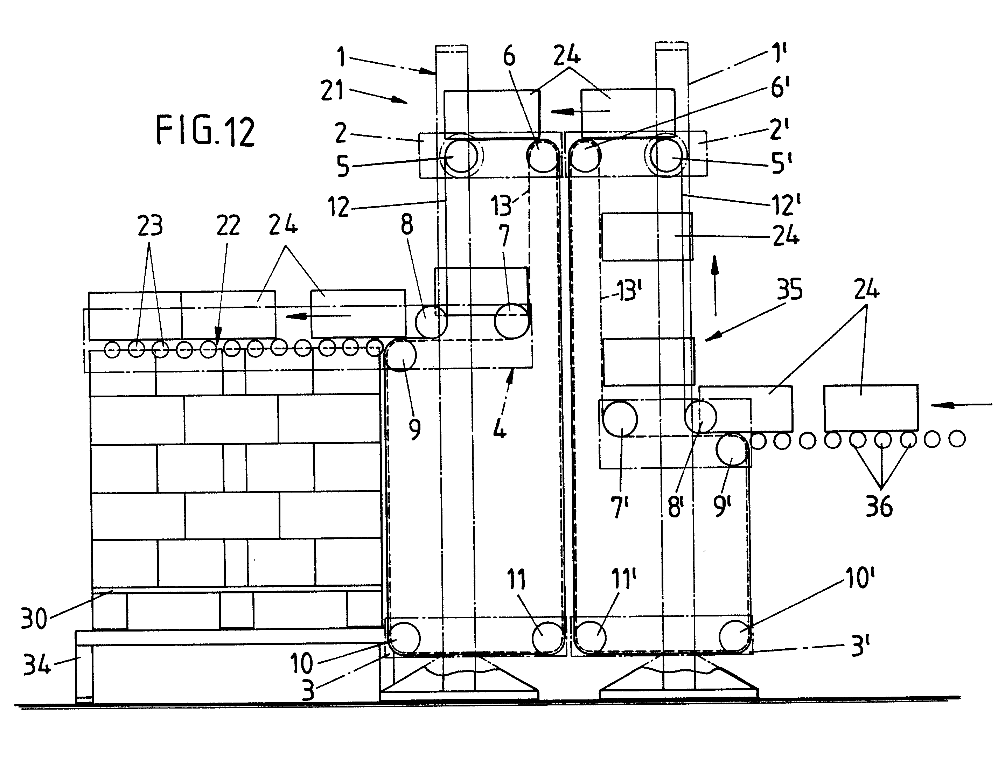

Jeweils nach Bilden einer Schicht fährt der Kettenräderträger 4 mit der Packstück-Stützbahn 20 um das Höhenmaß einer Schicht in Aufwärtsrichtung, so daß anschließend die auf der Packstück-Stützbahn erneut gebildete Schicht auf die darunter befindliche Schicht gelegt werden kann, vergl. Fig. 12. Der Packstück-Zwischenförderstrecke zugeordnete, nicht dargestellte Umlenkglieder können zu einem Verdrehen der Packstücke um eine vertikale Achse führen, so daß unterschiedlich gestaltete Schichten entstehen, die dem Packstückstapel eine größere Stabilität verleihen.

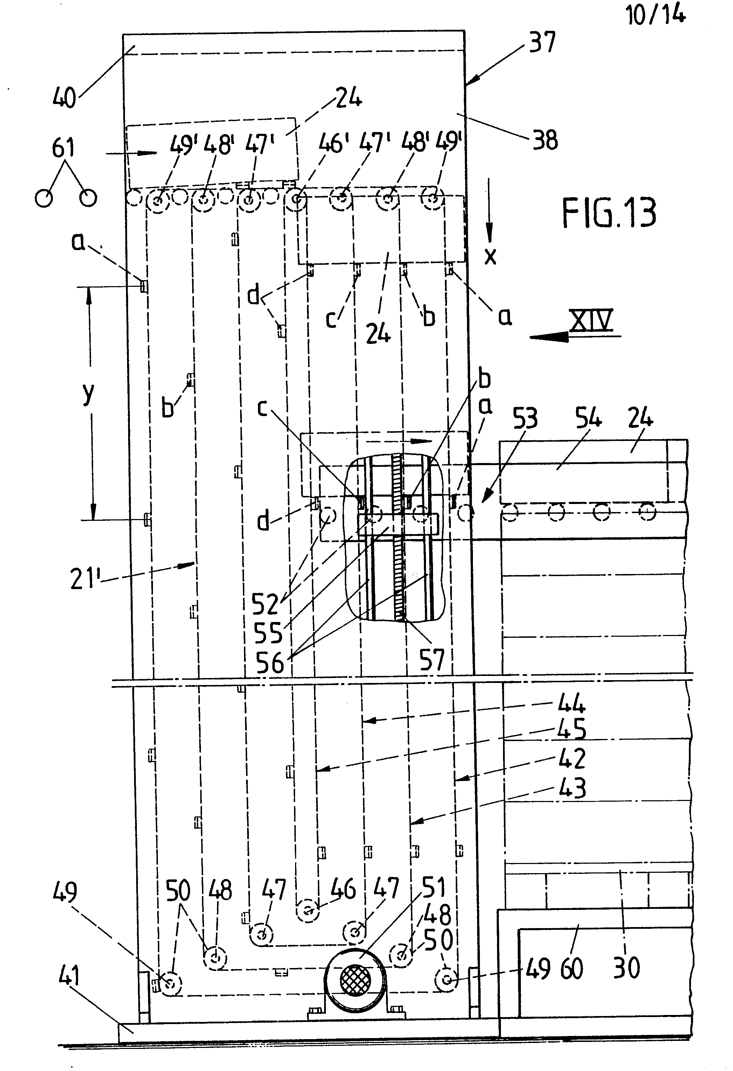

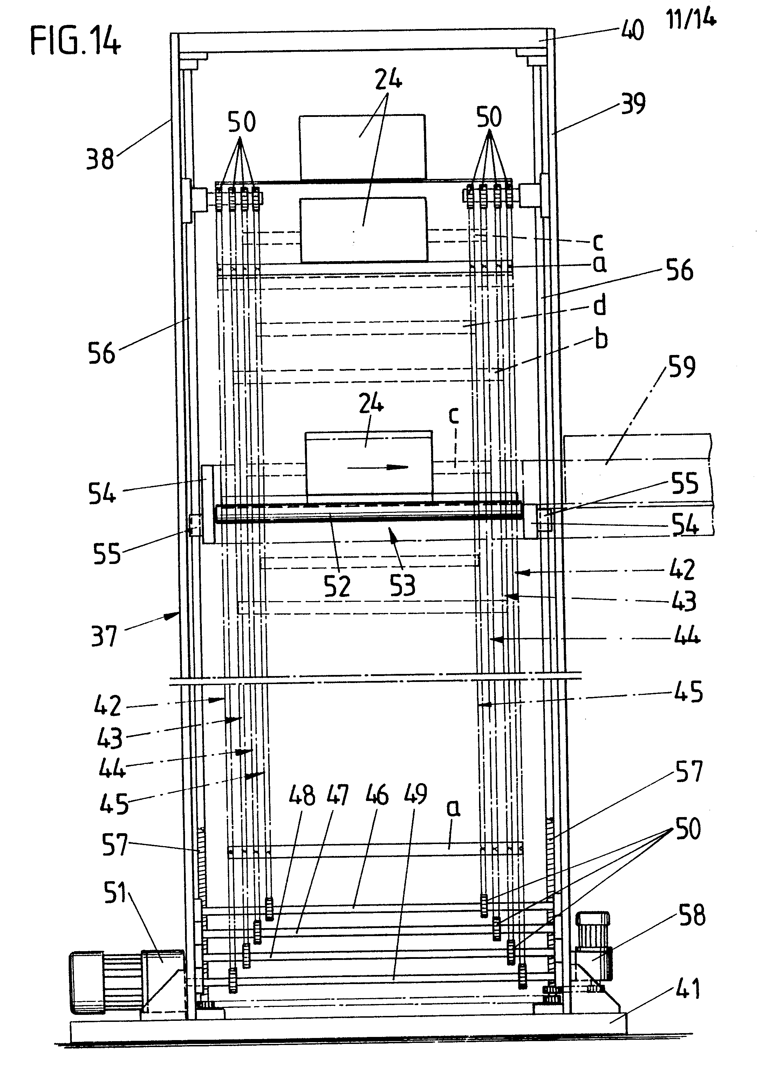

Gemäß der zweiten, in den Fig. 13 und 14 dargestellten Ausführungsform besitzt die Vorrichtung ein portalartiges Gestell 37. Letzteres setzt sich zusammen aus den beiden vertikalstehenden Seitenwangen 38, 39, die an ihren oberen Enden durch eine Kopfplatte 40 untereinander verbunden sind. Die unteren Enden der Seitenwangen 38, 39 gehen von einer Fußplatte 41 aus.

Der Innenwand jeder Seitenwange 38, 39 sind vier einen Aufwärtsförderer 21' bildende Kettenzüge 42, 43, 44, 45 benachbart. Die je einer Seitenwange zugeordneten Kettenzüge besitzen gleichen Abstand zueinander derart, daß der Kettenzug 45 am weitesten innen des Portals läuft. Bezüglich der Kettenzüge 45 handelt es sich auch um die Kettenzüge mit der geringsten Länge.

Die unteren Achsen 46 bis 49 der Kettenzüge 42 bis 43 liegen auf den Seiten eines Dreiecks mit im Dreiecksscheitel befindlicher Achse 46 für den am weitesten innen laufenden Kettenzug 45. Dagegen befinden sich die oberen Achsen 46', 47', 48', 49' aller Kettenzüge in einer Horizontalebene. Auf den Achsen sitzen Kettenräder 50, um welche die Kettenzüge gelegt sind. Im einzelnen sieht dies so aus, daß der am weitesten innenliegende Kettenzug 45 zwei Kettenräder 50 beinhaltet, während die übrigen Kettenzüge jeweils vier Kettenräder 50 aufweisen. Aus Fig. 13 geht hervor, daß der am weitesten außenliegende Kettenzug 42 die größte Länge besitzt zufolge des größten horizontalen Abstandes zwischen den Achsen 9, 9'.

Die Vorlauf-Kettenabschnitte bewegen sich in Pfeilrichtung x. Den Antrieb erhalten die Kettenzüge durch einen Getriebemotor 51, welcher auf der Fußplatte 41 angeordnet ist, und zwar außenseitig der Seitenwange 38.

Je zwei gleichlange Kettenzüge sind durch stabförmige Tischglieder a,b,c und d verbunden. Die Tischglieder a sind den am weitesten außenliegenden Kettenzügen 42 zugeordnet. Die Tischglieder b sitzen an den Kettenzügen 43 und die weiteren Kettenglieder c und d an den Kettengliedern 44 bzw. 45. Sämtliche Tischglieder a bis d sind horizontal ausgerichtet. Ferner ist die Tischglieder-Abstandsteilung y aller Kettenzüge untereinander gleich. Die Tischglieder a, b, c und d sind so den Kettenzügen 42 bis 45 zugeordnet, daß sie im Bereich der Vorlauf-Kettenabschnitte bzw. der Transportstrecke horizontale Gliedertische bilden derart, daß jeder Gliedertisch sich aus unterschiedlich langen Tischgliedern a, b, c und d zusammensetzt. Bezüglich der Tischglieder a handelt es sich um die längsten, während die übrigen Tischglieder in ihrer Länge abnehmen, so daß die Tischglieder d die geringste Länge aufweisen. Bezüglich der Tischglieder a und d handelt es sich um die End-Tischglieder, während die übrigen Tischglieder b und c die Zwischen-Tischglieder darstellen.

Die Tischglieder laufen zwischen den Spalten von Rollwalzen 52 einer Packstück-Zwischenförderstrecke 53 hindurch. Letztere besitzt die beiden auf gleicher Höhe angeordneten, außenseitig der Kettenzüge befindlichen Lagerplatten 54 zur Aufnahme der Rollwalzen 52. Die Lagerplatten 14 tragen außenseitig Böckchen 55, welche von zwei vertikal und parallel zueinander verlaufenden Führungsstangen 56 durchsetzt sind. Letztere sind in der Kopfplatte 40 und Fußplatte 41 verankert. Zwischen je zwei Führungsstangen 56 befindet sich eine ebenfalls an Kopfplatte und Fußplatte gelagerte Gewindespindel 57, die eine Gewindebohrung des Böckchens 55 durchsetzt. Angetrieben werden die Gewindespindeln 57 von einem in der Drehrichtung umschaltbaren Getriebe 58, so daß je nach Drehrichtung die Packstück-Zwischenförderstrecke 53 entweder in Aufwärts- oder in Abwärtsrichtung bewegt wird. Durch diese Maßnahme ist es möglich, eine der Packstück-Zwischenförderstrecke in gleicher Weise zugeordnete Packstück-Stützbahn 59 der Höhe der Packstück-Abgabeposition anzupassen. Bei dieser Ausführungsform befindet sich unterhalb der Packstück-Stützbahn 59 ein Fußgestell 60 für einen palettenförmigen Träger 30.

Ferner verlaufen parallel zu den oberen Achsen 46', 47', 48', 49' Rollwalzen 61 einer Zuführbahn, von welcher die Packstücke 24 in Pfeilrichtung befördert werden.

Im einzelnen arbeitet die Vorrichtung gemäß dieser Ausführungsform in der Weise, daß die ankommenden Packstücke 24 aufgenommen werden von den Tischgliedern und danach in Abwärtsrichtung x die Transportstrecke durchlaufen. Sie gelangen dann auf die Rollwalzen 52 der Packstück-Zwischenförderstrecke 53 und danach auf die Packstück-Stützbahn, von welcher sie schichtweise abgesenkt werden nach Öffnen derselben.

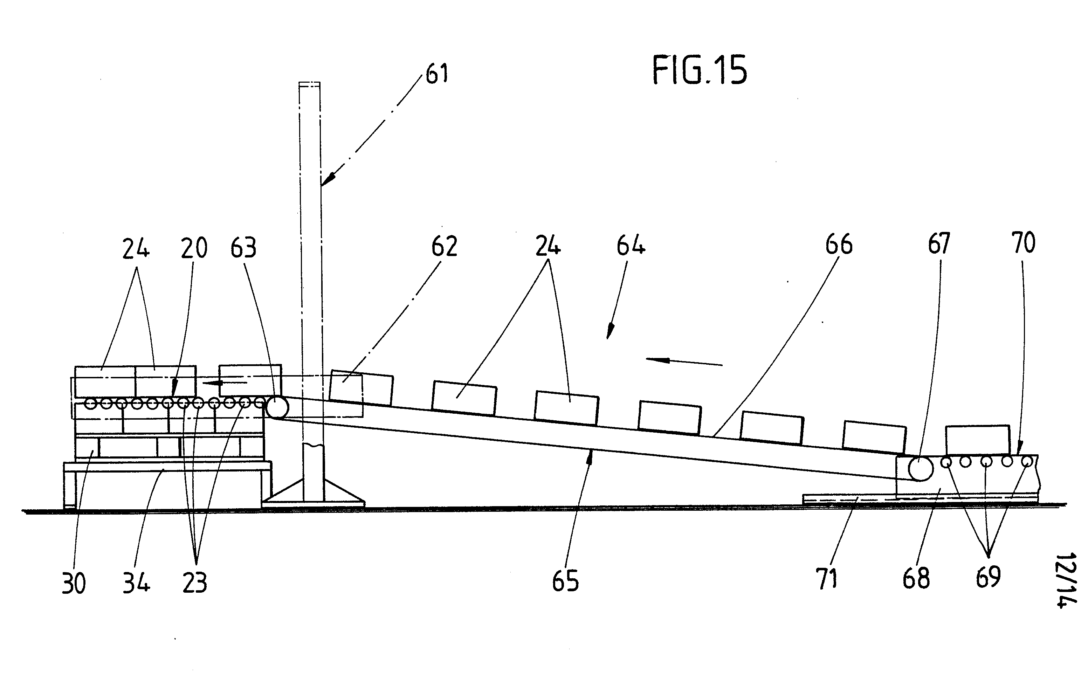

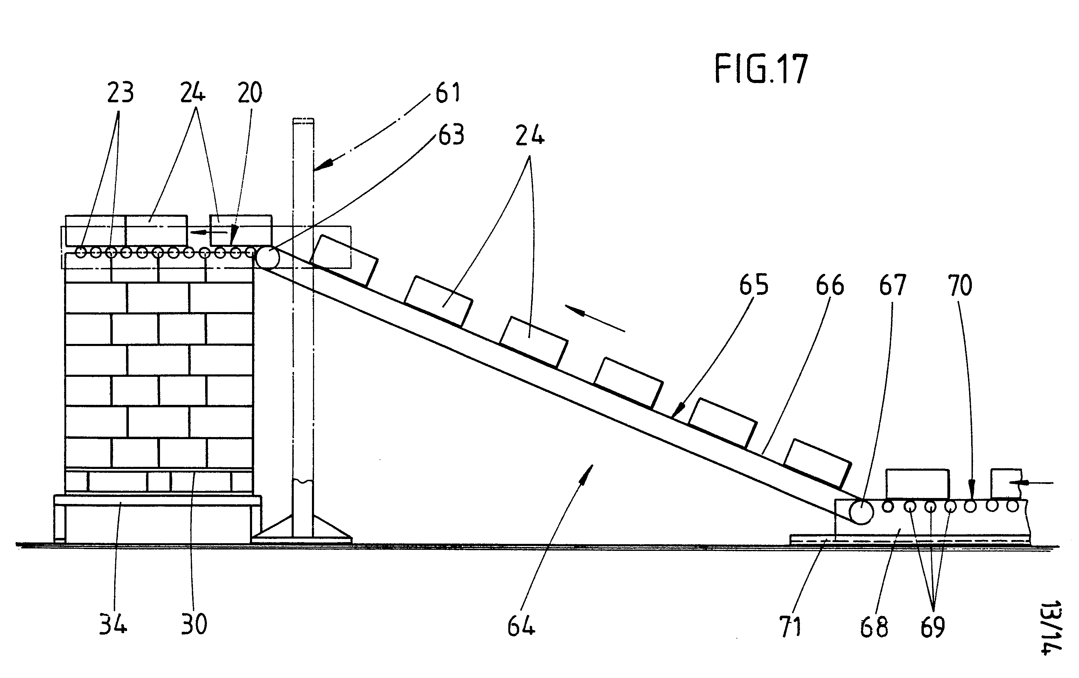

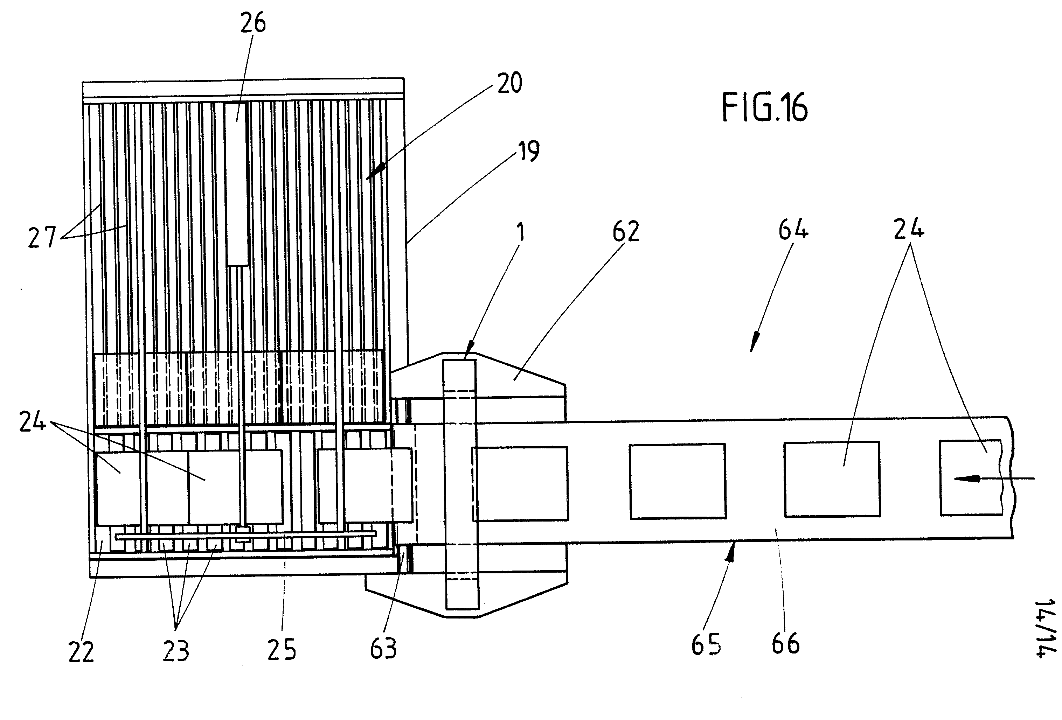

Gemäß der dritten, in den Fig. 15 bis 17 dargestellten Ausführungs-Form besitzt die Vorrichtung einen portalartigen Ständer 61 zur Führung eines Schlittens 62. Letzterer ist Träger des Rahmens 19, welcher die Packstück-Stützbahn 20 beinhaltet. Auch dieser ist eine Packstück-Zwischenförderstrecke 22 mit entsprechenden Rollwalzen 23 zugeordnet. Ferner ist ein von einem Hubzylinder 26 gesteuerter Pusher 25 vorgesehen. Zur Bildung der Packstück-Stützbahn 20 dienen ebenfalls auf gleicher Höhe mit den Rollwalzen 23 angeordnete Stäbe 27 zur Auflage der Packstücke 24.

In Verlängerung der Packstück-Zwischenförderstrecke 22 ist ein Aufwärtsförderer 64 vorgesehen. Dieser ist als Schrägförderer 65 ausgebildet. Bezüglich desselben handelt es sich um ein Förderband 66, dessen obere Umlenkwalze 63 im Schlitten 62 nahe der ersten Rollwalze 23 der Packstück-Zwischenförderstrecke 22 gelagert ist derart, daß die Oberkante der Rollwalzen 23 mit der Oberkante der Umlenkwalze 63 abschließt. Die Packstücke 24 gelangen daher störungsfrei von dem Förderband 66 auf die Rollwalzen 23 der Packstück-Zwischenförderstrecke 22.

Eine Verlagerung der Packstück-Stützbahn 20 in Höhenrichtung führt gleichzeitig zu einer Verlagerung des oberen Endes bzw. der Umlenkwalze 63 des Schrägförderers 65. Zwangsläufig verändert auch das untere Ende bzw. die dortige Umlenkwalze 67 ihre Lage. Die Umlenkwalze 67 sitzt in einem in horizontaler Richtung geführten Schlitten 68, der die Transportwalzen 69 einer Zubringerbahn 70 beinhaltet. Dadurch steht das untere Ende des Förderbandes 66 ständig in Überlappung zu dieser Zubringerbahn 70. Ungeachtet einer Neigungsverstellung, die sich zwangsläufig bei einer Höhenverlagerung der Packstück-Förderbahn 20 ergibt, werden die Packstücke 24 störungsfrei auf das Förderband 66 geleitet. Der Schlitten 68 selbst gleitet in einer bodenseitigen Führung 71.

Auch bei dieser Ausgestaltung wird ein auf dem Fußgestell 34 befindlicher palettenförmiger Träger 30 schichtweise beladen derart, daß die jeweilige Packstück-Schicht dicht oberhalb der Palettenstapel-Oberseite gebildet wird. Nach Ablegen derselben fährt die Packstück-Stützbahn 20 um das Maß einer Schichtdicke in Aufwärtsrichtung. Die Öffnung schließt und eine neue Packstück-Schicht kann auf der Packstück-Stützbahn 20 erzeugt werden.

Bspw. ist es möglich, in den Aufwärtsförderer 64 eine Wendestation zu integrieren, um ein unterschiedlich gestaltetes Versatzbild der Packstück-Schicht zu erhalten.

Alle in der Beschreibung erwähnten und in der Zeichnung dargestellten neuen Merkmale sind erfindungswesentlich, auch soweit sie in den Ansprüchen nicht ausdrücklich beansprucht sind.

19 029  Dr.R./P./Rz.   11.2.1987

17

<u>P a t e n t a n s p r ü c h e</u>

1. Vorrichtung zum Bilden mehrschichtiger Stapel von Packstücken oder dergleichen auf palettenförmigen Trägern, mit einem der Palette benachbarten Aufwärtsförderer, welcher die Packstücke oder dergleichen auf eine über die Palettenstapel-Oberseite ragende, höhenverlagerbare Packstück-Stützbahn übergibt, welche Packstück-Stützbahn im Bereich oberhalb der Palettenstapel-Oberseite zum Ablegen der auf ihr befindlichen Schicht öffenbar ist, dadurch gekennzeichnet, daß die Höhenlage der Position, in welcher der Aufwärtsförderer (21, 21', 64) die Packstücke (24) auf die Packstück-Stützbahn (20 bzw. 59) übergibt, jeweils übereinstimmt mit der Position, in welcher sich die Packstück-Stützbahn (20, 59) öffnet.

2. Vorrichtung nach Anspruch 1, dadurch gekennzeichnet, daß die Packstück-Stützbahn (20, 59) von Stäben (27) gebildet ist, die sich zwischen Ketten (28, 29) erstrecken, welche beiderseits eines in seiner Größe etwa der Packstück-Oberseite entsprechenden höhenverstellbaren Rahmens (19) gelagert sind.

3. Vorrichtung nach einem oder mehreren der vorhergehenden Ansprüche, dadurch gekennzeichnet, daß die Packstück-Stützbahn (20, 59) sich zum Entfernen aus dem Bereich der Palettenstapel-Oberseite, ausgehend von ihrem Mittelbereich, schieberförmig öffnet bis auf das Flächenmaß der Palettenstapel-Oberseite.

4. Vorrichtung nach einem oder mehreren der vorhergehenden Ansprüche, dadurch gekennzeichnet, daß die Ketten (28, 29) der Packstück-Stützbahn-Stäbe (27) in U-förmigen Seitenführungen (31) des Rahmens (19) laufen und in Öffnungsstellung der Packstück-Stützbahn vor den Stirnenden des Rahmens (19) herunterhängen.

19 029  Dr.R./P./Rz.   11.2.1987

5. Vorrichtung nach einem oder mehreren der vorhergehenden Ansprüche, dadurch gekennzeichnet, daß die Packstück-Stützbahn (20) seitenversetzt liegt zur Ausgaberichtung des Aufwärtsförderers (21), welcher Seitenversatz überbrückt ist mit einer sich in Verlängerung der Ausgaberichtung erstreckenden Packstück-Zwischenförderstrecke (22), der ein die Packstücke (24) quer zur Ausgaberichtung auf die Packstück-Stützbahn verschiebender Pusher (25) zugeordnet ist.

6. Vorrichtung nach einem oder mehreren der vorhergehenden Ansprüche, dadurch gekennzeichnet, daß die schieberartige Öffnungsbewegung der Packstück-Stützbahn (20) parallelgerichtet ist zur Ausgaberichtung des Aufwärtsförderers (21).

7. Vorrichtung nach einem oder mehreren der vorhergehenden Ansprüche, dadurch gekennzeichnet, daß der Aufwärtsförderer (21, 21') als von umlaufenden Zügen, z. B. Kettenzügen (12, 13 bzw. 42, 43, 44, 45), gebildeter Aufwärtsförderer gestaltet ist und eine Gliedertischfläche bildet.

8. Vorrichtung nach einem oder mehreren der vorhergehenden Ansprüche, dadurch gekennzeichnet, daß die Tischglieder (14, 15, 17) des Aufwärtsförderers (21) an mehreren in Höhenrichtung seitlich der Tischglieder verlaufenden Zügen (12, 13) angeordnet sind derart, daß die Tischglieder über den Bereich der Transportstrecke tischbildend nebeneinander und im Bereich der Rücklaufabschnitte übereinanderliegend angeordnet sind, wobei ein- und auslaufseitige Tischglieder (14, 15) sich brückenförmig zwischen nebeneinanderliegenden Zügen (12, 13) erstrecken und die dazwischen befindlichen Tischglieder (17) über den Bereich der Transportstrecke in eine Ebene zu diesen End-Tischgliedern (14, 15) treten, wobei sich die Gliedertischfläche im Bereich zweier benachbarter Umlenkräder der Züge (12, 13) bildet bzw. aufhebt, von denen mindestens das die Gliedertischfläche aufhebende Räderpaar (9) an einem am Aufwärtsförderer-Ständer (1) höhenverlagerbaren Räderträger (4) sitzt.

19 029   Dr.R./P./Rz.   11.2.1987

19

9. Vorrichtung nach einem oder mehreren der vorhergehenden Ansprüche, dadurch gekennzeichnet, daß der Räderträger (4) den Rahmen (19) der Packstück-Stützbahn (20) trägt.

10. Vorrichtung nach einem oder mehreren der vorhergehenden Ansprüche, dadurch gekennzeichnet, daß dem Aufwärtsförderer (21) Rücken an Rücken ein Packstückhochförderer (35) zugeordnet ist und sämtliche Packstücke (24) über den Scheitel des Aufwärtsförderers (21) und von da aus, auf der Gliedertischfläche liegend, bis auf die Höhe der Packstück-Stützbahn bewegt sind.

11. Vorrichtung nach einem oder mehreren der vorhergehenden Ansprüche, dadurch gekennzeichnet, daß die Tischglieder (14, 15, 17) sich in ihrer tischbildenden Stellung durch gegenseitigen formschlüssigen Eingriff an ihren Schmalkanten (18) untereinander verriegeln und durch einen Zusatzkettenstrang (16) untereinander verbunden sind.

12. Vorrichtung nach einem oder mehreren der vorhergehenden Ansprüche, dadurch gekennzeichnet, daß auch die Zwischen-Tischglieder (b, c) sich brückenförmig zwischen je zwei Zügen erstrecken und die Tischglieder-Abstandsteilung (y) aller Züge (42, 43, 44, 45) untereinander gleich ist.

13. Vorrichtung nach Anspruch 11, dadurch gekennzeichnet, daß die unteren Achsen (46 bis 49) der Züge (42, 43, 44, 45) auf den Seiten eines Dreiecks liegen mit im Dreiecksscheitel befindlicher Achse (6) für die am weitesten innenlaufenden Züge (45).

14. Vorrichtung nach einem oder mehreren der vorhergehenden Ansprüche, dadurch gekennzeichnet, daß die Tischglieder zwischen den Spalten von Rollwalzen (52) hindurchlaufen, welche die Packstück-Zwischenförderstrecke (53) bilden.

15. Vorrichtung nach einem oder mehreren der vorhergehenden Ansprüche, dadurch gekennzeichnet, daß die oberen Achsen (46', 47', 48', 49') aller Züge (42 bis 45) in einer Horizontalebene liegen.

16. Vorrichtung nach einem oder mehreren der vorhergehenden Ansprüche, dadurch gekennzeichnet, daß alle Züge (42, 43, 44, 45) in einem portalartigen Gestell (37) angeordnet sind.

17. Vorrichtung nach Anspruch 1, dadurch gekennzeichnet, daß der Aufwärtsförderer (64) als Schrägförderer (65) mit sich zusammen mit der Packstück-Stützbahn (20) höhenverlagerbarem oberen Ende gestaltet ist.

18. Vorrichtung nach Anspruch 17, dadurch gekennzeichnet, daß das untere Ende des Schrägförderers (65) in Überlappung zu einer Zubringerbahn (70) längsverschieblich angeordnet ist.

19 029   Dr.R./P./Rz.   11.2.1987

FIG.1

FIG.10

FIG.2

FIG.3

FIG.4

FIG. 5

FIG.6

FIG.7

FIG.8

32   31   28   19   29   33

27   20   27

IX   IX

023913

7/14

8/14

FIG.9

FIG.11

FIG.12

FIG.13

FIG.14

FIG.15

FIG.17

FIG.16